(19) Europäisches Patentamt
European Patent Office
Office européen des brevets

(11) Publication number: 0 285 874
A1

# (12) EUROPEAN PATENT APPLICATION

(21) Application number: 88104204.8

(51) Int. Cl.[4] C08G 75/02

(22) Date of filing: 16.03.88

(30) Priority: 16.03.87 US 26232

(43) Date of publication of application:
12.10.88 Bulletin 88/41

(84) Designated Contracting States:
AT BE CH DE ES FR GB GR IT LI LU NL SE

(71) Applicant: PHILLIPS PETROLEUM COMPANY
5th and Keeler
Bartlesville Oklahoma 74004(US)

(72) Inventor: Cliffton, Michael Duane
123 Lakeview Drive
Martinez, GA 30907(US)
Inventor: Geibel, Jon Frederick
2600 Mountain Road
Bartlesville, OK 74003(US)

(74) Representative: Geissler, Bernhard, Dr.
Patent- und Rechtsanwälte et al
Bardehle-Pagenberg-Dost-
Altenburg-Frohwitter-Geissler & Partner
Postfach 86 06 20
D-8000 München 86(DE)

## (54) Melt stabilization of polymers.

(57) Improved poly(arylene sulfide ketone)s and poly(arylene sulfide sulfone)s are prepared by contacting these polymers with calcium cations, optionally first with an alkali metal base, for a period of time sufficient to improve the melt stability of the polymers. The polymer can be subsequently cured to increase molecular weight.

EP 0 285 874 A1

# MELT STABILIZATION OF POLYMERS

## Field of the Invention

The invention relates to a method for preparing poly(arylene sulfide ketone)s. In another aspect this invention relates to a method for preparing poly(arylene sulfide sulfone)s. The invention also relates to fibers and other articles of manufacture prepared from these polymers.

## Background of the Invention

Poly(arylene sulfide ketone)s and poly(arylene sulfide sulfone)s are engineering thermoplastics of potential commercial interest for film, fiber, molding, and composite applications because of their high melting points and heat resistance.

General processes for the production of poly(arylene sulfide ketone)s and poly(arylene sulfide sulfone)s are known. Poly(arylene sulfide ketone)s can be prepared by the reaction of a polyhaloaromatic ketone, such as 4,4'-dichlorobenzophenone, with an alkali metal sulfide in a polar organic solvent. Poly(arylene sulfide sulfone)s can be prepared by the reaction of a polyhaloaromatic sulfone, such as bis(p-chlorophenyl)sulfone, with an alkali metal sulfide in a polar organic solvent.

However a major disadvantage has been that the poly(arylene sulfide ketone)s and poly(arylene sulfide sulfone)s so produced are of relatively low melt stability. Further, the cured or processed polymers are of poor polymer quality in that they appear black, brittle, outgassed, and of carbonaceous texture.

It would be most desirable to produce melt stable poly(arylene sulfide ketone)s and poly(arylene sulfide sulfone)s of good polymer quality that are able to be processed and cured. Melt stable poly(arylene sulfide ketone)s and poly(arylene sulfide ketone)s would provide improved processability, color, texture, flexibility, and toughness. In addition, melt stable poly(arylene sulfide ketone)s and poly(arylene sulfide sulfone)s should be able to be slowly cured or cured in a controlled fashion, to increase the molecular weight, without destroying the quality of the polymer.

It is an object of our invention to provide a process for preparing melt stable poly(arylene sulfide ketone)s and poly(arylene sulfide sulfone)s. It is a further object of our invention to provide a process for preparing poly(arylene sulfide ketone)s and poly(arylene sulfide sulfone)s of good polymer quality. It is a further object of our invention to prepare poly(arylene sulfide ketone)s and poly(arylene sulfide sulfone)s of good polymer quality having a stable melt flow.

## Summary of the Invention

We have discovered that melt stable poly(arylene sulfide ketone)s and poly(arylene sulfide sulfone)s are prepared by bringing together the particular polymer, either a poly(arylene sulfide ketone) or a poly(arylene sulfide sulfone), with calcium cations ($Ca^{++}$). The poly(arylene sulfide ketone)s or poly(arylene sulfide sulfone)s produced therefrom exhibit a stable melt flow and desirable polymer qualities when compared to poly(arylene sulfide ketone)s or poly(arylene sulfide sulfone)s which have not been contacted with the calcium cations.

## Detailed Description of the Invention

In accordance with our invention, melt stable poly(arylene sulfide ketone)s or poly(arylene sulfide sulfone)s are prepared by contacting either poly(arylene sulfide ketone)s or poly(arylene sulfide sulfone)s with calcium cations ($Ca^{++}$). Any process whereby calcium cations contact the polymer is envisioned to be within the scope of the present invention, such as polymer melt mixing with calcium oxide (CaO).

Mixtures or copolymers of poly(arylene sulfide ketone)s and/or poly(arylene sulfide sulfone)s are envisioned to be within the scope of the present invention, however, the homopolymers are more preferred.

In our invention, it is preferred that the poly(arylene sulfide ketone) (PASK) or the poly(arylene sulfide sulfone) (PASS) be treated with water soluble calcium cations ($Ca^{++}$) such as in a calcium salt. It is even more preferred that the calcium cations be employed as a salt such as a calcium halide or a calcium

carboxylate. The salts of calcium which are more preferred include calcium chloride, calcium fluoride, calcium bromide, calcium iodide, calcium acetate, and the like, and mixtures of any two or more thereof. The most preferred calcium salts, due to their effectiveness and availability, are calcium chloride, and calcium acetate.

In our invention, it is preferred that the calcium treatment process by a two-step process. Prior to contacting the polymer with the water soluble calcium cations it is preferred that the polymer be contacted with a dilute effective proportion of a base such as an aqueous alkali metal base such as an alkali metal carbonate or an alkali metal hydroxide. The alkali metal hydroxides are preferred and include sodium hydroxide (NaOH), lithium hydroxide, potassium hydroxide, rubidium hydroxide, and cesium hydroxide. The most preferred alkali metal base, due to its effectiveness and availability, is sodium hydroxide.

The presently most preferred process includes washing the polymers with aqueous sodium hydroxide followed by washing the polymers with aqueous calcium acetate.

In our invention it is also preferred that the calcium treated polymers be cured. Polymers treated according to our invention are melt stable but yet can be cured in reasonable periods of time. In the present invention the cured polymers have higher molecular weights when compared to the uncured polymers. These cured calcium treated polymers have improved properties and are even more suitable for certain products like injection molding compounds and film, that the uncured calcium treated polymers. However, caution should be exercised not to overly cure the polymers, since overly cured polymers are not able to be processed.

According to the present invention, the molecular weight of the polymer is indicated by its inherent viscosity. High inherent viscosity indicates that a polymer has a high molecular weight. The inherent viscosity is determined according to ASTM D 2857 at 30°C in concentrated sulfuric acid for poly(arylene sulfide ketone)s, and at 30°C in N-methyl-2-pyrrolidone for poly(arylene sulfide sulfone)s.

The preferred high molecular weight poly(arylene sulfide ketone)s of the present invention will generally be expected to have an inherent viscosity of at least about 0.3, preferably at least about 0.4 most preferably about 0.5 to 1 deciliters per gram (dℓ g). The preferred high molecular weight poly(arylene sulfide sulfone)s will generally be expected to have an inherent viscosity of at least 0.25 preferably at least 0.35, and most preferably 0.4 to 0.8 deciliters per gram.

The polymers of the present invention are preferably cured after calcium treatment. The curing is conducted at elevated temperatures for a suitable curing time. The polymers can be cured as a solid material below their melting point or as a polymer melt at temperatures above their melting point. Typically, temperatures employed are within the range of about 150°C to 500°C for about 5 minutes to 72 hours, more preferably at about 250°C to 400°C for about 15 minutes to 24 hours. The rate of cure depends upon the temperature and rate of cure is increased with increased temperature.

The polymers of the present invention can be cured at reduced or increased pressure; however, it is preferred that the polymers be cured at about atmospheric pressure under an oxidizing atmosphere such as air. Curing the polymers according to the present invention can also increase the melt stability of the polymers.

It is also possible, but less preferred, to cure the polymer during calcium treatment. This type of curing can be conducted at elevated temperatures in the presence of calcium cations and oxygen.

In the present invention, the calcium treated polymers can be subjected to a second treatment with other known chemical treating agents such as hydrogen peroxide or sodium hypochlorite. This second treatment is generally conducted prior to curing but yet after calcium treatment.

The melt stability of the polymers prepared according to our invention can be assessed by noting the change in the rate of melt flow of each polymer after being retained in a barrel of a melt index apparatus under ASTM D1238 conditions for a time ranging from about five minutes to about thirty minutes at an elevated temperature. That temperature is 371°C for poly(arylene sulfide ketone)s and 343°C for poly(arylene sulfide sulfone)s.

The melt flow measurement at arbitrarily selected times is determined by extruding the molten polymer through the orifice in the barrel using a five kilogram driving weight. The time required to extrude a predetermined volume of polymer through the orifice is recorded and the weight of the cooled extrudate is measured. The melt flow is calculated in terms of grams of polymer extruded per 10 minutes of flow. If little or no change occurs in the melt flow of the polymer using hold periods of five minutes and thirty minutes, then it is apparent that a stable melt flow product is being tested. Generally, a melt flow decrease occurs indicated by a longer extrusion time required to extrude a predetermined amount of polymer from the barrel. However, in some instances, a melt flow increase occurs indicated by a shorter time required to extrude a predetermined amount of polymer from the barrel. For the purpose of this invention a change in the rate of polymer extrusion (melt flow) of more than about a ± 50 percent from the five minute melt flow to

the ten minute melt flow, is arbitrarily deemed to be not acceptable.

A melt stable polymer is prepared by contacting the polymer, either a poly(arylene sulfide ketone) or a poly(arylene sulfide sulfone), with sufficient calcium cations at a temperature and pressure for a period of time sufficient to improve the melt stability of the polymer.

Generally, the polymers are contacted with the calcium cations at a temperature of about 50°C to 350°C. Preferably the polymers are contacted with the calcium cations at a temperature of about 100°C to 200°C, at a pressure of about 15 to 1500 psia, for a time ranging from about ½ minute to 3 hours.

The amount of calcium cations added to contact the polymer can vary depending upon the qualities desired in the final treated polymer. Generally, the calcium salt solution ranges from 0.001 weight percent up to the solubility limits of the particular salt employed. Preferably, the calcium salt solution is in the range of 0.1 to 5 weight percent.

The time for contacting the polymers with the calcium cation can vary widely, depending, in part, on the temperature and the nature of the polymers. It generally will be within a range of about 30 seconds to 3 hours, preferably from about 1 minute to 1 hour. The pressure should be sufficient to maintain liquid phase conditions which can range from about 0 to 1,500 psia. Repeated treatments can be employed, if desired, and the process can be carried out in several stages, if desired.

The heating and contacting with the calcium cation can be carried out with conventional equipment. A convenient method for carrying out the process is to contact the polymers and calcium cation in an enclosed tank provided with agitation. The contacting can be carried out in a single vessel or with a plurality of vessels. The polymers can be separated from the reaction product after contacting by suitable techniques including pressure reduction to atmospheric, filtration, and the like. The polymers are subsequently dried for further use as desired.

Preparation of PASK

PASK can be prepared by contacting a polyhaloaromatic ketone and a sulfur source under polymerization conditions. One preferred process for preparing PASK involves contacting in a reaction mixture under polymerization conditions effective ratios of a polyhalobenzophenone, an alkali metal sulfide, and water, in a polar organic medium.

Examples of polyhalobenzophenones include 4,4'-dichlorobenzophenone, 4,4'-difluorobenzophenone, 4,4'-dibromobenzophenone, 4,4'-diiodobenzophenone, 2,4'-dichlorobenzophenone, 2,4,4'-trichlorobenzophenone, and the like, and mixtures thereof. When preparing PASK, our process more preferably employs a dihalobenzophenone of the formula:

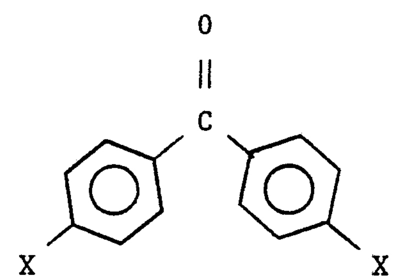

wherein X is selected from the group consisting of a chlorine, bromine, fluorine, and iodine. The presently preferred dihalobenzophenone, due to its effectiveness and commercial availability, is 4,4'-dichlorobenzophenone.

The more preferred process of preparing PASK is by the reaction of a dihalobenzophenone, such as 4,4'-dichlorobenzophenone, with an alkali metal sulfide prepared from an alkali metal hydrosulfide, such as sodium hydrosulfide, and an alkali metal hydroxide, such as sodium hydroxide, and water, in a polar organic solvent, such as an organic amide like N-methyl-2-pyrrolidone, forming repeating units of phenylene sulfide ketone and is represented by the following formula:

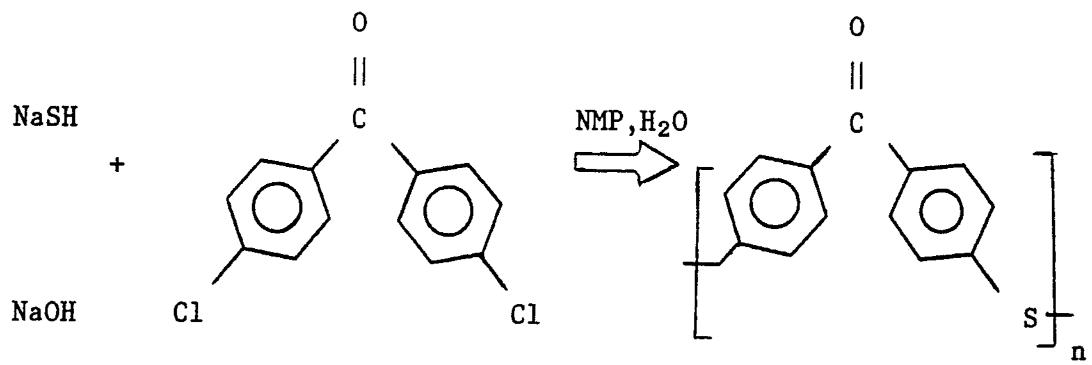


Optionally, an additional amount of 4-chlorobenzophenone or 4,4′-dichlorobenzophenone may be added to endcap the polymer near the end at the required polymerization time.

Preparation of PASS

PASS can be prepared by contacting a polyhaloaromatic sulfone and a sulfur source under polymerization conditions. One preferred process for preparing PASS involves contacting in a reaction mixture under polymerization conditions effective ratios of, a polyhaloaromatic sulfone, an alkali metal sulfide, and water in a polar organic medium.

When preparing PASS our process employs a polyhaloaromatic sulfone. Our process preferably employs a dihaloaromatic sulfone. Our process more preferably employs a dihaloaromatic sulfone of the formula:

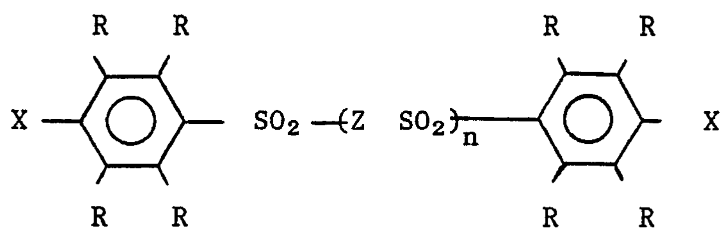

where each X is selected from the group consisting of fluorine, chlorine, bromine, and iodine; Z is a divalent radical selected from the group consisting of

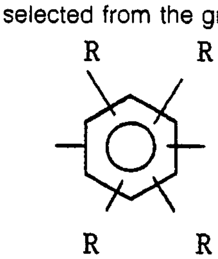

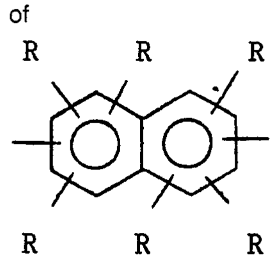

and

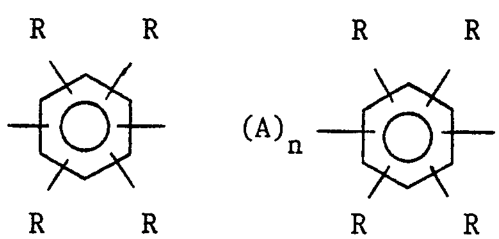

n is 0 or 1; A is selected from the group consisting of oxygen, sulfur, sulfonyl, and $CR_2$; and each R is selected from the group consisting of hydrogen and alkyl radicals having 1 to about 4 carbon atoms, the total number of carbon atoms in all of the R groups in the molecule being 0 to about 12. Preferably, each n is 0.

Bis(p-halophenyl) sulfones are presently preferred reactants in the process of our invention and can be represented by the formula

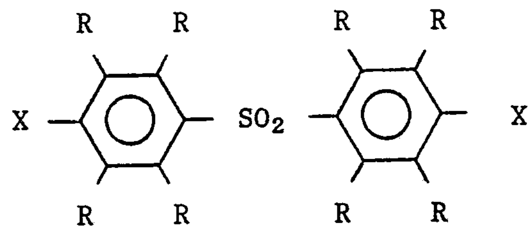

where each X is selected from the group consisting of fluorine, chlorine, bromine, and iodine, and each R is selected from the group consisting of hydrogen and alkyl radicals having 1 to about 4 carbon atoms, the total number of carbon atoms in each molecule being within the range of 12 to about 24.

Examples of some dihaloaromatic sulfones that can be employed in the process of our invention include bis(p-fluorophenyl)sulfone, bis(p-chlorophenyl)sulfone, bis(p-bromophenyl)sulfone, bis(p-iodophenyl)-sulfone, p-chlorophenyl, p-bromophenylsulfone, p-iodophenyl 3-methyl-4-fluorophenyl sulfone, bis(2-methyl-4-chlorophenyl)sulfone, bis(2,5-diethyl-4-bromophenyl)sulfone, bis(3-isopropyl-4-iodophenyl)sulfone, bis(2,5-dipropyl-4-chlorophenyl)sulfone, bis(2-butyl-4-fluorophenyl)sulfone, bis(2,3,5,6-tetramethyl-4-chlorophenyl)-sulfone, 2-isobutyl-4-chlorophenyl,3-butyl-4-bromophenyl sulfone, 1,4-bis(p-chlorophenylsulfonyl)benzene, 1-methyl-2,4-bis(p-fluorophenylsulfonyl)benzene, 2,6-bis(p-bromophenylsulfonyl) naphthalene, 7-ethyl-1,5-bis(p-iodophenylsulfonyl)naphthalene, 4,4′-bis(p-chlorophenylsulfonyl)biphenyl, bis[p-(p-bromophenylsulfonyl)phenyl] ether, bis[p-(p-chlorophenyl-sulfonyl)phenyl]sulfide, bis[p-(p-chlorophenylsulfonyl)phenyl]-sulfone, bis[p-(p-bromophenylsulfonyl) phenyl]methane, 5,5-bis[3-ethyl-4-(p-chlorophenylsulfonyl)phenyl]-nonane, and the like, and mixtures thereof.

The presently preferred dihaloaromatic sulfone, due to its effectiveness and commercial availability, is bis(p-chlorophenyl) sulfone.

The more preferred process of preparing PASS is by the reaction of a dihaloaromatic sulfone, such as bis(p-chlorophenyl)sulfone, with an alkali metal sulfide prepared from an alkali metal hydrosulfide, such as sodium hydrosulfide, and an alkali metal hydroxide, such as sodium hydroxide, and water, in a polar organic solvent, such as an organic amide like N-methyl-2-pyrrolidone (NMP), forming repeating units of phenylene sulfide sulfone and is represented by the following formula:

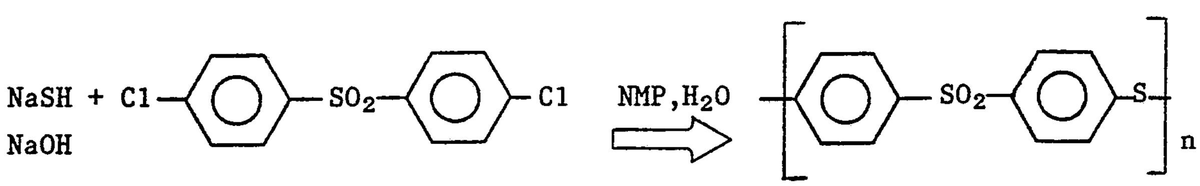


Aspects of PASK and PASS Production

The alkali metal sulfide can be prepared from the reaction product of an alkali metal hydrosulfide with an alkali metal hydroxide in an aqueous solution. Although the molar ratio of alkali metal hydrosulfide to alkali metal hydroxide can vary somewhat, it is more preferred, particularly when preparing PASK, that the alkali metal hydrosulfide be in a slight molar excess of about 0.5 to about 2 mole percent compared to the alkali metal hydroxide. Generally the molar ratio will be within the range of about 1:1, preferably in the range of about 0.95 to 1.05, more preferably about 1:1 to 1.01:1, with 1:005:1 being most preferred. The alkali metal hydrosulfides for our invention include lithium hydrosulfide, sodium hydrosulfide, potassium hydrosulfide, rubidium hydrosulfide, cesium hydrosulfide, and mixtures thereof.

The preferred alkali metal hydrosulfides, due to its effectiveness and availability, is sodium hydrogen

sulfide (NaSH). The preferred alkali metal hydroxide, due to its effectiveness and availability, is sodium hydroxide (NaOH).

The solvents which can be useful in preparing the polymers of our invention are polar organic solvents. Such polar organic solvents include amides and sulfones.

The polar organic solvents used in preparing the polymers in this invention should be substantially liquid at the reaction temperatures and pressures employed. The polar organic solvents can be cyclic or acyclic and can have 1 to about 18 carbon atoms per molecule.

Specific examples of such polar organic solvents include 1,3-dimethyl-2-imidazolidinone, formamide, acetamide, hexamethylphosphoramide, tetramethylurea, N,N'-ethylene-2-pyrrolidone, N-methyl-2-pyrrolidone (NMP), 2-pyrrolidone, ε-caprolactam, N-ethylcaprolactam, sulfolane, N,N'-dimethylacetamide, diphenylsulfone, and the like, and mixtures thereof. The preferred polar organic solvent due to its effectiveness and commercial availability, is NMP.

It is preferred, particularly when preparing PASK, that a molar excess (stoichiometric excess) of water be present in the reaction mixture with respect to the alkali metal hydrosulfide. Although the molar excess of water to hydrosulfide can vary somewhat, generally it will be within a molar ratio of about 3.5:1 to 7:1, preferably about 4:1 to 6:1, more preferably about 4.7:1 to 5.7:1. When preparing PASS it is preferred that the molar ratio of water to hydrosulfide be within the range of about 2:1 to 12:1.

## Examples

Examples provided are intended to assist in a further understanding of our invention. Particular materials employed, species and conditions are intended to be further illustrative of our invention and not limitative of the reasonable scope thereof.

### Example I

In this example the preparation of a control poly(phenylene sulfide ketone) (PPSK) is described. To a two gallon stainless steel reactor fitted with an anchor stirrer and nitrogen inlet tube were charged: 2.01 moles of sodium hydrogen sulfide solution (191.8 grams of NaSH in solution), 2.00 moles of sodium hydroxide pellets (80 grams of NaOH pellets provided by Mallinckrodt, Inc., St. Louis, Mo), 2.00 moles of 4,4'-dichlorobenzophenone (502 grams of DCBP provided by Ihara Chemical Industry Company, Tokyo, Japan), 24.84 moles of N-methyl-2-pyrrolidone (2400 ml of NMP provided by BASF) and 6 moles of deionized water (108 ml of water).

The reactor was sealed and flushed several times with 100 psig $N_2$ and then vented to remove air while the reactor mixture was stirred at room temperature. The reactor mixture was then heated to a temperature of about 250°C. This temperature was maintained for about 4 hours while a pressure of about 180 psig was established. The reactor was then cooled to about 200°C. About 0.025 moles of 4,4'-dichlorobenzophenone (DCBP) was charged to the reactor in conjunction with 700 ml of NMP for endcapping purposes. The system was heated an additional hour at 250°C, and cooled over night to room temperature. Following filtration, the polymer was given a cold deionized water wash 3 hot deionized water washes, and dried in a forced air oven at about 110°C for about 6 hours. PPSK prepared from this procedure exhibited fair melt stability, however, outgassing of the polymer melt was evident and the polymer extrudate was black and brittle. The polymer further acquired a black carbonaceous appearance.

### Example II

This example illustrates the preparation of good quality melt stable PPSK by contacting (washing) PPSK, prepared as in Example I, with an aqueous NaOH solution followed by an aqueous $CaCl_2$ solution.

The crude reactor product was washed with hot water (tap/distilled/deionized) and filtered. The washing step is typically repeated 5 times to remove residual side products and solvent. The wet polymer is charged back to a 2 gallon reactor along with a 1 percent NaOH solution (3,000 ml solution for 500 grams of polymer). The reactor vessel is pressurized and flushed several times with 100 psi $N_2$ (3 times). The reaction mixture was heated to about 125°C and cooled immediately. The polymer was subsequently filtered and rinsed once with distilled water. The polymer was subsequently charged back into the reactor along with 3,000 ml of a 5 percent calcium chloride ($CaCl_2$) solution. The reaction mixture was pressurized

with 100 psi $N_2$ and flushed several times (3 times). The reaction mixture was subsequently heated to 185°C for about 30 minutes and cooled. The reaction mixture was then rinsed once with distilled water and dried in a forced oven at about 100° to about 110°C for about 18 hours.

The melt stability and physical properties of PPSK are summarized in Table I:

Table I

PPSK Flow Rates From The Melt Indexer (a)

| | Hold Time/Flow Rates(b) 5 Min | 10 Min | 15 Min |
|---|---|---|---|
| Run # 1 No endcap, the polymer was not washed with $CaCl_2$ or NaOH. | 358 | 168 | 85 |
| | outgassing; extrudate black and brittle. | | |
| #2 No endcap, the polymer was washed with NaOH then $CaCl_2$. | 247 | 168 | 102 |
| | no outgassing; extrudate gray in color becomes less brittle with increased time in the melt indexer. | | |
| #3 Endcapped with 4-chlorobenzophenone, the polymer was not washed with $CaCl_2$ or NaOH. | 376 | 668 | 580 |
| | outgassing; extrudate black and brittle. | | |
| #4 Endcapped with 4-chlorobenzophenone, the polymer was washed with NaOH then $CaCl_2$ | 163 | 95 | 32 |
| | no outgassing; extrudate gray in color and becomes less brittle with increased time in the melt indexer. | | |

(a) Melt indexer at 371°C
(b) Flow rates g/10 min

The results in Table 1 indicate that PPSK polymers, which were washed with sodium hydroxide and calcium cations exhibited no outgassing (no bubbles or voids in extrudate), and the extrudates were gray in color and became less brittle with increased time in the melt indexer. In comparison, PPSK which was not washed with NaOH and $CaCl_2$ exhibited outgassing, the extrudate was black and brittle, and the polymer acquired a black carbonaceous appearance. It is apparent from the results in Table I that contacting the PASK sequentially with NaOH and $CaCl_2$ will improve the melt stability and polymer quality of the PASK, when compared to PASK which is not contacted with NaOH and $CaCl_2$.

It is evident from the results above that the processing of PPSK raises some unique problems. As shown by the data above when PPSK is treated, or washed, according to the present invention the PPSK is dramatically improved. The melt stability of the PPSK treated according to the present invention is improved to the point where injection molding can be accomplished.

## Example III

In this example the preparation of a control poly(phenylene sulfide sulfone) (PPSS) is described. To a two gallon stainless steel reactor fitted with an anchor stirrer and nitrogen inlet tube were charged: 2.01 moles of the sodium hydrogen sulfide solution (190.5 grams of 59.15 weight percent solution of NaSH in water), 2.11 moles of sodium acetate (172.9 grams provided by Niacet Corporation, Niagara Falls, N.Y.), 2.01 moles of bis(p-chlorophenyl)sulfone (557.1 grams of bis(p-chlorophenyl)sulfone provided by Union

Carbide), 16.56 moles of NMP (1600 ml provided by BASF), and 6 moles of deionized water (108 ml of water).

The reactor was sealed and then flushed several times with 100 psig $N_2$ and then vented to remove air while the reactor mixture was stirred at room temperature. The reactor mixture was then heated to a temperature of about 195°C stirred at 400 rpm. This temperature was maintained for about two hours, while a pressure of 100 psig was established. The reactor mixture was then heated to a temperature of 200°C. This temperature was maintained for one hour, while a pressure of 105 psig was established. The reactor was then cooled over night to about room temperature. The product, a slick soupy purple solid, was filtered, and ground in a Waring blendor® and given a cold water wash and dried with a forced air oven at about 110°C for about 18 hours. The PPSS prepared from this procedure exhibited fair melt stability, however, outgassing the polymer melt was evident and the polymer extrudate was dark and brittle.

<u>Example IV</u>

This example illustrates the preparation of good quality melt stable PPSS by contacting (washing) PPSS prepared as in Example III, with an aqueous NaOH solution followed by an aqueous calcium chloride or calcium acetate solution.

The PPSS was prepared as in Example III with the following slight modifications. 2.00 moles of the sodium hydrogen sulfide solution (187.52 grams of 59.15 weight percent solution of NASH in water), 2.02 moles of sodium acetate (165.7 grams provided by Niacet Corporation of Niagara Falls, N.Y.), 2.02 moles of bis(p-chlorophenyl)sulfone (580.02 grams of bis(p-chlorophenyl)sulfone provided by Union Carbide), 2.02 moles sodium carbonate (214.1 grams), 16.166 moles of NMP (1562 ml provided by BASF), and 6 moles of deionized water (108 ml of water). The reactor mixture while being stirred was slowly heated over about 2½ hours to a temperature of about 200°C while a pressure of 180 psig was established. This temperature was maintained for about four hours. The reactor was then cooled quickly to about room temperature.

The crude reactor product was ground in a Waring blendor®, once in cold deionized water and 3 times in hot deionized water and filtered. The washing step removes residual salt by-products and solvent. The wet polymer was charged back to a two gallon reactor along with a one weight percent NaOH solution (3,000 ml of solution for 500 grams of polymer). The reactor vessel is pressurized and flushed 3 times with 100 psi $N_2$. The reactor mixture was heated to about 120°C and cooled immediately. The polymer was subsequently filtered and rinsed 3 times with room temperature distilled water. The wet polymer was subsequently charged back into the reactor along with 3000 ml of a five weight percent calcium chloride ($CaCl_2$) or calcium acetate solution. The reaction mixture was pressurized with 100 psi $N_2$ and flushed several times (3 times). The reaction mixture was subsequently heated to 185°C for about 30 minutes. The reaction mixture was cooled filtered and water washed three times with distilled water and dried in a forced air oven at about 100°C to about 110°C for about 18 hours.

The melt stability and the physical properties of PPSS are summarized in Table II:

TABLE II

PPSS Flow Rates From the Melt Indexer (a)

| Run | Melt Indexer Hold Time for Each Sample | Flow Rate Taken at Time Intervals During Flow Measurement (b) 0-30 sec | 30-60 sec | 60-90 sec | 90-120 sec |
|---|---|---|---|---|---|
| Run #1. Control The polymer was washed with $H_2O$ only (c). | 5 min. | 12.848 | 15.258 | 15.272 | --- |
| Run #2. The polymer was washed with NaOH and calcium acetate (d). | 1 min. | 12.330 | 14.314 | 14.208 | 17.503 |
| | 5 min. | 13.404 | 13.868 | 12.636 | 16.465 |
| Run #3. The polymer was washed with NaOH and $CaCl_2$ (e). | 1 min. | 60.2 | --- | --- | --- |
| | 5 min. | 63.4 | --- | --- | --- |
| | 10 min. | 61.0 | --- | --- | --- |

(a) Melt indexer at 343°C.
(b) Flow rates expressed in units of g/10 min.
(c) Test terminated at 88.29 sec. The polymer was of poor quality and exhibited outgassing.
(d) The washed polymer was a very light amber good polymer and exhibited very little outgassing during melt flow rate determination.
(e) Melt flow rate determination was complete during first 30 seconds of flow.

The results in Table II indicate that PPSS, which was washed with sodium hydroxide and calcium chloride exhibited no outgassing, the extrudate was amber in color and became less brittle with increased time in the melt indexer. In comparison, PPSS which was not washed with NaOH and $CaCl_2$ exhibited outgassing, the extrudate was black and brittle, and the polymer acquired a black carbonaceous appearance. It is apparent from the results in Table II that contacting the PPSS with NaOH and $CaCl_2$ will improve the melt stability and polymer quality of the PPSS, when compared to PPSS which is not contacted with NaOH and $CaCl_2$.

It is evident from the results above that the processing of PPSS raises some unique problems. As shown by the data above, when PPSS is treated or washed according to the present invention, the PPSS is dramatically improved. The melt stability of the PPSS treated according to the present invention is improved to the point where injection molding can be accomplished.

## Example V

This example illustrates that curing the polymers of the present invention increases their molecular weight while improving polymer quality.

The molecular weight of the polymer in Example II above and Table I, Run #4 was examined at various points during cure. The results are below in Table III:

Table III
Time in the Melt (a)

| | 0 Min. | 5 Min. | 10 Min. | 15 Min. |
|---|---|---|---|---|
| Melt flow(b) | -- | 160 | 95 | 35 |
| Inherent Viscosity(c) | 0.58 | 0.64 | 0.67 | 0.75 |

(a) Melt indexer 700°F (371°C)

(b) Flow rates g/10 Min.

(c) dℓ/g deciliters/gram.

The results in Table III above indicate good curing. The polymer cured as above has good mechanical properties, required for good film forming. The results show that improved polymer properties are obtained by curing PPSK which has been contacted with NaOH and $CaCl_2$.

## Claims

1. A method for preparing melt stabilized polymers comprising:
contacting a polymer selected from the group consisting of poly(arylene sulfide ketone)s and poly-(arylene sulfide sulfone)s with calcium cations at a temperature and pressure for a period of time sufficient to improve the melt stability of the polymer.

2. The method according to claim 1, wherein said polymer is cured after being contacted with said calcium cations.

3. The method according to claim 1, wherein said temperature and pressure at which the polymer and calcium cations are contacted ranges from about 100°C to 200°C and about 15 to 1500 psia for a period of time ranging from about 1/2 minute to 3 hours.

4. The method according to claim 1, wherein said polymer is poly(arylene sulfide ketone) and is represented by repeating units of the structural formula:

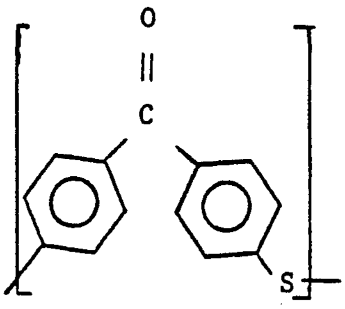

5. The method according to claim 4, wherein said poly(arylene sulfide ketone) comprising poly(phenylene sulfide ketone).

6. The method according to claim 1, wherein said polymer is poly(arylene sulfide sulfone) and is represented by repeating units of the structural formula:

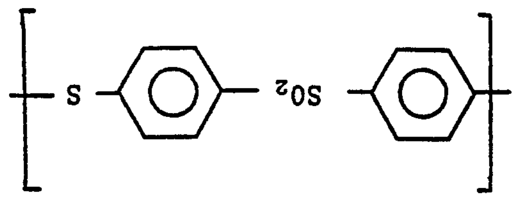

7. The method according to claim 6, wherein the poly(arylene sulfide sulfone) comprises poly(phenylene sulfide sulfone).

8. The method according to claim 1, wherein said calcium cations are derived from calcium salts.

9. The method according to claim 8, wherein said calcium salts are calcium carboxylates.

10. The method according to claim 9, wherein said calcium carboxylate is calcium acetate.

11. The method according to claim 8, wherein said calcium salts are calcium halides.

12. The method according to claim 11, wherein said calcium halide is calcium chloride.

13. A method for preparing a polymer namely a poly(arylene sulfide ketone) comprising:

(a) contacting in a polar organic solvent a polyhaloaromatic ketone, and an alkali metal sulfide under polymerization conditions effective for producing poly(arylene sulfide ketone);

(b) recovering the poly(arylene sulfide ketone), and

(c) contacting the recovered polymer, namely poly(arylene sulfide ketone) as defined in one of claims 1-12.

14. The method according to claim 13, wherein water is also present in said polar organic solvent of (a) in the molar ratio of about 3.5:1 to 7:1 water with respect to the alkali metal sulfide.

15. The method according to claim 13 or 14, wherein said polyhaloaromatic ketone comprises a dihalobenzophenone, and said polar organic solvent is an organic amide; more particularly wherein said dihalobenzophenone comprises 4,4'-dichlorobenzophenone, and said organic amide comprises N-methyl-2-pyrrolidone.

16. The method according to one of claims 13-15, wherein said alkali metal sulfide is prepared from an alkali metal hydrosulfide and an alkali metal hydroxide employing a molar ratio of about 1:1 alkali metal hydrosulfide to alkali metal hydroxide, the molar ratio of water with respect to the alkali metal hydrosulfide is in the range of about 3.5:1 to 7:1, and the polyhaloaromatic ketone employing a molar ratio of about 0.95:1 to 1.05:1 with respect to the alkali metal hydrosulfide, in particular wherein said molar ratio of alkali metal hydrosulfide to alkali metal hydroxide is about 1.005:1.

17. A method for preparing a polymer, namely a poly(arylene sulfide sulfone) comprising:

(a) contacting in a polar organic solvent a polyhaloaromatic sulfone and an alkali metal sulfide under polymerization conditions effective for producing the poly(arylene sulfide sulfone);

(b) recovering the poly(arylene sulfide sulfone) of (a); and

(c) contacting the recovered polymer, namely poly(arylene sulfide sulfone), as defined in one of claims 1-12.

18. The method according to claim 17, wherein water is also present in said polar organic solvent of (a) in the molar ratio of about 2:1 to about 12:1 water with respect to said alkali metal sulfide.

19. The method according to claim 17 or 18, wherein said polyhaloaromatic sulfone comprises a dihaloaromatic sulfone, and said polar organic solvent is an organic amide; in particular wherein said dihaloaromatic sulfone comprises bis(p-chlorophenyl)sulfone and said organic amide comprises N-methyl-2-pyrrolidone.

20. The method according to one of claims 17-19, wherein said alkali metal sulfide is prepared from an alkali metal hydrosulfide and an alkali metal hydroxide employing a molar ratio of about 1:1 alkali metal hydrosulfide to alkali metal hydroxide, the molar ratio of water with respect to the alkali metal hydrosulfide is in the range of about 2:1 to 12:1, and the polyhaloaromatic sulfone employing a molar ratio of about 0.95:1 to 1.05:1 with respect to the alkali metal hydrosulfide; in particular wherein the molar ratio of sodium hydrosulfide to sodium hydroxide is about 1.005:1.

21. A method for preparing a polymer comprising:

(a) contacting in N-methyl-2-pyrrolidone an alkali metal sulfide, water, and a monomer selected from the group consisting of dihalobenzophenones and bis(halophenyl)sulfones under polymerization conditions effective for producing a polymer;

(b) recovering said polymer of (a); and

(c) contacting the recovered polymer of (b) with an aqueous solution of a calcium salt at a temperature and pressure for a period of time sufficient to improve the melt stability of the polymer;

more particularly wherein said contacting is as defined in one of claims 1-12.

22. The method according to claim 21, wherein the alkali metal sulfide is prepared from alkali metal hydrosulfide and alkali metal hydroxide and the molar ratio of alkali metal hydrosulfide to alkali metal hydroxide is within the range of about 0.95:1 to 1.05:1, the molar ratio of water to alkali metal hydrosulfide is within the range of about 4:1 to 6:1 and the molar ratio of the monomer to alkali metal hydrosulfide is within the range of about 0.95:1 to 1.05:1.

23. The method according to one of claims 13-22, wherein said recovered polymer of (b) is treated with a dilute aqueous alkali metal base prior to contacting said polymer with said cations of step (c);

in particular wherein said alkali metal base is alkali metal hydroxide, more particularly sodium hydroxide.

24. A melt stable polymer selected from poly(arylene sulfide ketone) and poly(arylene sulfide sulfone) which contains calcium cations.

25. A melt stable polymer of claim 24 wherein the polymer has been prepared by a method in accordance with one of claims 1-23.

26. A fiber produced from the polymer of claim 24 or 25.

European Patent Office

# EUROPEAN SEARCH REPORT

Application Number

EP 88 10 4204

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 100 536 (KUREHA KAGAKU K.K.)<br>* claims 1,2,6,8; page 6, line 14 - page 9, line 24; page 10, lines 14-16; page 16, lines 17-20; page 20, line 21 - page 21, line 8 *<br>--- | 1,3,6-8,11,12,24-26 | C 08 G 75/02 |
| A | DE-A-3 143 992 (PHILLIPS PETROLEUM CO.)<br>* claims 1,2,6,7 *<br>--- | 1,3,8,10,14,17 | |
| A | 2ATENT ABSTRACTS OF JAPAN, vol. 9, no. 188 (C-295)[1911] 3rd August 1985; & JP - A - 60 55029 (KUREHA KAGAKU KOGYO K.K.) 29-03-1985<br>--- | 1-25 | |
| A | PATENT ABSTRACTS OF JAPAN, vol. 10, no. 208 (C-361)[2264], 22nd July 1986; & JP - A - 61 51034 (TOYO SODA MFG CO LTD) 13-03-1986<br>--- | 1-25 | |
| A | EP-A-0 144 987 (PHILLIPS PETROLEUM CO.)<br>* claims 1,10,11,13; examples 1B,2B,4B,5B *<br>--- | 1,3,8,10-12 | TECHNICAL FIELDS SEARCHED (Int. Cl.4)<br>C 08 G 75/00 |
| A | EP-A-0 103 279 (PHILLIPS PETROLEUM CO.)<br>* page 2, lines 22-34; page 4, lines 1-33; example II; claims * | 1-25 | |
| X | | 24-26 | |
| | --- | | |
| A | GB-A-1 163 332 (MINNESOTA MINING AND MANUFACTURING CO.)<br>* column 1, lines 35-45; claims *<br>----- | 1-25 | |

The present search report has been drawn up for all claims

| Place of search | Date of completion of the search | Examiner |
|---|---|---|
| BERLIN | 14-07-1988 | BOEKER R.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document